(19) Europäisches Patentamt
European Patent Office
Office européen des brevets

(11) **EP 3 418 074 B1**

(12) **EUROPEAN PATENT SPECIFICATION**

(45) Date of publication and mention
of the grant of the patent:
**10.06.2020 Bulletin 2020/24**

(21) Application number: **17882881.0**

(22) Date of filing: **06.12.2017**

(51) Int Cl.:
*B60C 5/00* (2006.01)          *B60C 1/00* (2006.01)
*B60C 9/18* (2006.01)          *B60C 11/00* (2006.01)
*C08K 3/04* (2006.01)          *C08K 3/06* (2006.01)
*C08K 3/36* (2006.01)          *B60C 19/00* (2006.01)
*C08L 7/00* (2006.01)

(86) International application number:
**PCT/JP2017/043850**

(87) International publication number:
**WO 2018/116835 (28.06.2018 Gazette 2018/26)**

(54) **PNEUMATIC TIRE**

LUFTREIFEN

PNEUMATIQUE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **20.12.2016 JP 2016246901**

(43) Date of publication of application:
**26.12.2018 Bulletin 2018/52**

(73) Proprietor: **Sumitomo Rubber Industries, Ltd.
Kobe-shi, Hyogo 651-0072 (JP)**

(72) Inventors:
• **NAKATANI, Masako**
  **Kobe-shi**
  **Hyogo 651-0072 (JP)**
• **KAWACHI, Takahiro**
  **Kobe-shi**
  **Hyogo 651-0072 (JP)**
• **YAMADA, Ayuko**
  **Kobe-shi**
  **Hyogo 651-0072 (JP)**
• **HIRO, Masataka**
  **Kobe-shi**
  **Hyogo 651-0072 (JP)**
• **YAMAUCHI, Satomi**
  **Kobe-shi**
  **Hyogo 651-0072 (JP)**
• **ONO, Shuichiro**
  **Kobe-shi**
  **Hyogo 651-0072 (JP)**
• **MAEKAWA, Tetsuya**
  **Kobe-shi**
  **Hyogo 651-0072 (JP)**
• **MAEKAWA, Natsuki**
  **Kobe-shi**
  **Hyogo 651-0072 (JP)**
• **TOYA, Subaru**
  **Kobe-shi**
  **Hyogo 651-0072 (JP)**

(74) Representative: **Manitz Finsterwald
Patent- und Rechtsanwaltspartnerschaft mbB
Martin-Greif-Strasse 1
80336 München (DE)**

(56) References cited:
EP-A1- 2 138 331          EP-A1- 2 397 314
EP-A1- 2 397 347          EP-A1- 2 623 337
WO-A1-2016/012945          JP-A- 2004 339 424
JP-A- 2014 520 175          JP-A- 2015 086 344
JP-A- 2016 210 250

**Description**

**Technical Field**

The present invention relates to a pneumatic tire in which a noise damper is disposed on a tire inner cavity surface.

**Background Art**

Conventionally, a pneumatic tire has been proposed in which a noise damper made of a porous material is integrally fixed to a tire inner cavity surface of an inner liner in order to suppress running noise of a pneumatic tire (see Patent Literature 1 below).
Patent Literature 1: Japanese Patent No. 4960626

**Disclosure of the invention**

**Problem to be solved by the invention**

The inner liner repeatedly deforms during running. Thereby, in order to prevent damage or the like to the noise damper, the noise damper is required to have flexibility to deform following the deformation of the inner liner.
However, under low temperature environments, the noise damper becomes hard, therefore, it is difficult that the noise damper follows the deformation of the inner liner during running. As a result, it is possible that durability is deteriorated, such as breakage of the noise damper, during running. When the noise damper is destroyed, although there is no problem in safety, desired noise damping performance cannot be obtained.
The present invention was made in view of the above, and a primary object thereof is to provide a pneumatic tire capable of improving the durability of the noise damper by making glass transition temperature Tg1 of the noise damper smaller than glass transition temperature Tg2 of the inner liner.

**Means for solving the Problem**

The present invention is a pneumatic tire comprising a carcass extending between a pair of bead portions, an inner liner arranged on an inner side in a tire radial direction of the carcass and forming a tire inner cavity surface, and a noise damper made of a porous material and fixed to the tire inner cavity surface of the inner liner, wherein a glass transition temperature Tg1 of the noise damper is lower than a glass transition temperature Tg2 of the inner liner.
In the pneumatic tire according to the present invention, a difference (Tg2-Tg1) of the glass transition temperature Tg2 of the inner liner and the glass transition temperature Tg1 of the noise damper may be not less than 20 degrees Celsius.
In the pneumatic tire according to the present invention, a density of the noise damper may be in a range of from 10 to 40 kg/m3.
In the pneumatic tire according to the present invention, a volume V1 of the noise damper may be in a range of from 0.4% to 30% of a total volume V2 of a tire inner cavity.
In the pneumatic tire according to the present invention, it is preferred that a tensile strength of the noise damper is in a range of from 70 to 115 kPa.
In the pneumatic tire according to the present invention, it is preferred that the pneumatic tire further comprises a belt layer arranged on an outer side in the tire radial direction of the carcass and inside the tread portion, and a damping rubber body arranged inside the tread portion and on an inner or outer side in the tire radial direction of the belt layer, wherein
a width W1 in a tire axial direction of the damping rubber body is in a range of from 60% to 130% of a width w2 in the tire axial direction of the belt layer.
In the pneumatic tire according to the present invention, it is preferred that a ratio (H1/H2) of a hardness H1 of the damping rubber body and a hardness H2 of a tread rubber arranged in the tread portion is in a range of from 0.5 to 1.0.
In the pneumatic tire according to the present invention, it is preferred that the pneumatic tire further comprises a tread rubber arranged in a tread portion, wherein the tread rubber has a loss tangent tan δ at zero degrees Celsius not less than 0.40 and the loss tangent tan δ at 70 degrees Celsius not more than 0.20.
In the pneumatic tire according to the present invention, it is preferred that the pneumatic tire further comprises a tread rubber arranged in a tread portion, wherein the tread rubber contains carbon black, silica, and sulfur, and a content A1 (phr) of the carbon black, a content A2 (phr) of the silica, and a content A3 (phr) of the sulfur satisfy relationship of the following formula (1):

$$(1.4 \times A1 + A2)/A3 \geq 20 \ldots (1).$$

**Advantageous Effects of the invention**

The pneumatic tire according to the present invention comprises the carcass extending between a pair of the bead portions, the inner liner arranged on the inner side in the tire radial direction of the carcass and forming the tire inner cavity surface, and the noise damper made of the porous material and fixed to the tire inner cavity surface of the inner liner, The noise damper suppresses cavity resonance in the tire inner cavity, therefore, it is possible that the running noise of the pneumatic tire is decreased.

The glass transition temperature Tg1 of the noise damper is lower than the glass transition temperature Tg2 of the inner liner.

Thereby, even in a low temperature environment, it is possible that the glass transition (that is, hardening) of the noise damper is prevented from occurring before the glass transition of the inner liner.

Therefore, the noise damper can deform flexibly following the deformation of the inner liner, thereby, it is possible that the durability of the noise damper is improved.

**Brief Description of the Drawings**

[Fig. 1] a cross-sectional view of a pneumatic tire as an embodiment of the present invention.
[Fig. 2] a cross-sectional view of a pneumatic tire as another embodiment of the present invention.
[Fig. 3] a cross-sectional view of a pneumatic tire as yet another embodiment of the present invention.

**Description of the Reference Signs**

1      pneumatic tire
4      bead portion
7      carcass
10     inner liner
16     tire inner cavity surface
20     noise damper

**Best Mode for carrying out the invention**

An embodiment of the present invention will now be described in conjunction with accompanying drawings.

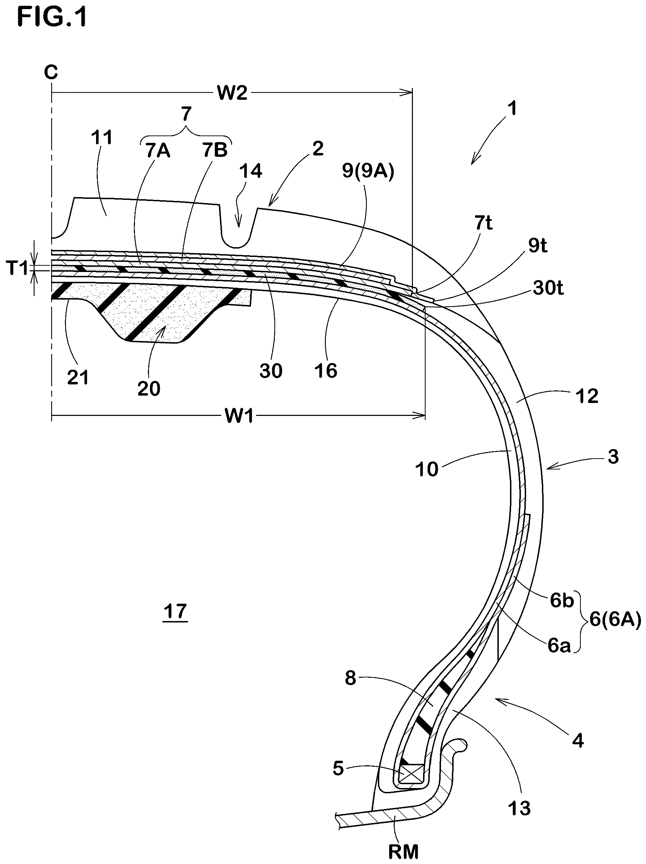

Fig. 1 is a tire meridian section passing through a tire rotational axis of a pneumatic tire (hereinafter may be simply referred to as "tire") 1 in this embodiment in a standard state. Here, the standard state is a state in which the tire is mounted on a standard rim RM, inflated to a standard inner pressure, and loaded with no tire load. Hereinafter, dimensions and the like of various parts of the tire 1 are those measured under the standard state, unless otherwise noted.

The "standard rim" is a wheel rim specified for the concerned tire by a standard included in a standardization system on which the tire is based, for example, the "normal wheel rim" in JATMA, "Design Rim" in TRA, and "Measuring Rim" in ETRTO.

The "standard pressure" is air pressure specified for the concerned tire by a standard included in a standardization system on which the tire is based, for example, the "maximum air pressure" in JATMA, maximum value listed in the "TIRE LOAD LIMITS AT VARIOUS COLD INFLATION PRESSURES" table in TRA, and "INFLATION PRESSURE" in ETRTO. when the tire is for a passenger car, it is set to 200 kPa uniformly in consideration of the actual use frequency and the like.

As shown in Fig. 1, the tire 1 is suitably used as a radial tire for passenger cars, for example. The tire 1 in this embodiment has a carcass 6, a belt layer 7, a band layer 9, an inner liner 10, and a noise damper 20. Further, the tire 1 in this embodiment has a damping rubber body 30.

The carcass 6 extends between a pair of bead portions 4, 4. The carcass 6 is formed of at least one, one in this embodiment, carcass ply 6A. The carcass ply 6A includes a main body portion 6a extending between bead cores 5 of the bead portions 4 via a tread portion 2 and sidewall portions 3 and turned up portions 6b each being turned up around respective one of the bead cores 5 from inside to outside in a tire axial direction. Between the main body portion 6a and each of the turned up portions 6b of the carcass ply 6A, a bead apex rubber 8 extending outwardly in a tire radial direction from respective one of the bead cores 5.

Carcass cords (not shown) are arranged at an angle in a range of from 80 to 90 degrees with respect to a tire equator C in the carcass ply 6A, for example. As the carcass cords, organic fiber cords such as aromatic polyamide and rayon can be used, for example.

A tread rubber 11 disposed in the tread portion 2, sidewall rubbers 12 each forming an outer surface of respective one of the sidewall portions 3, bead rubbers 13 each forming an outer surface of respective one of the bead portions 4, and the like are arranged outside the carcass 6. The tread rubber 11 is provided with grooves 14 each recessed inwardly in the tire radial direction from a ground contacting surface thereof.

The belt layer 7 is arranged on an outer side in the tire radial direction of the carcass 6 and inside the tread portion 2. The belt layer 7 is formed of two belt plies, i.e. radially inner and outer belt plies 7A and 7B. The belt plies 7A and 7B are provided with belt cords (not shown) arranged at an angle in a range of from 10 to 35 degrees with respect to a tire circumferential direction, for example. The belt plies 7A and 7B are overlapped so that the belt cords of the belt ply 7A and the belt cords of the belt ply 7B cross each other. As the belt cords, steel, aramid, rayon or the like can be used, for example.

The band layer 9 is arranged on an outer side the tire radial direction of the belt layer 7. The band layer 9 in this embodiment includes a band ply 9A in which band cords are wound in a spiral manner at an angle not more than 10 degrees, preferably not more than 5 degrees with respect to the tire circumferential direction. As the band cords, an organic fiber cord such as a nylon cord can be used, for example.

The inner liner 10 is arranged on an inner side in the tire radial direction of the carcass 6. The inner liner 10 forms a tire inner cavity surface 16. The inner liner 10 is made of air-impermeable butyl-type rubber, for example.

The noise damper 20 is formed of a porous material having a large number of pores on a surface thereof. The noise damper 20 is fixed to the tire inner cavity surface 16 of the inner liner 10.

As the porous material, a porous sponge material is exemplified, for example. The sponge material is a cavernous porous structure body. Further, the sponge material includes not only a so-called sponge itself having interconnected cells formed by foamed rubber or a synthetic resin but also a web body formed of an animal fiber, a vegetable fiber, or a synthetic fiber and the like integrally interwoven, for example. Further, the "porous structure body" includes not only a body having the interconnected cells but also a body having closed cells.

The noise damper 20 has an elongated belt-like shape having a bottom surface fixed to the tire inner cavity surface of the tread portion 2 and extends in the tire circumferential direction. Outer end portions in the circumferential direction of the noise damper 20 may be in contact with each other to form a substantially annular shape, or the outer end portions may be spaced apart in the tire circumferential direction.

The noise damper 20 in this embodiment has substantially the same cross-sectional shape at an arbitrary position in the tire circumferential direction except for the outer end portions. Further, in order to prevent collapse and deformation during running, the cross-sectional shape is formed as a flat and horizontally elongated shape in which a height is smaller than a width in the tire axial direction. Furthermore, on a side of an inner surface in the tire radial direction of the noise damper 20, a concave groove 21 extending continuously in the circumferential direction is provided.

In the noise damper 20 configured as such, the pores on the surface of or inside the noise damper convert vibration energy of the vibrating air into thermal energy, therefore, it is possible that the vibration energy is consumed. Thereby, sound (cavity resonance energy) is decreased, therefore, it is possible that the running noise (around 250 Hz, for example) is decreased. Further, the sponge material is easy to deform such as contraction, flexion, etc. Thereby, the noise damper 20 can deform flexibly following the deformation of the inner liner 10 during running.

Glass transition temperature Tg1 of the noise damper 20 in this embodiment is smaller than glass transition temperature Tg2 of the inner liner 10. The glass transition temperatures Tg1 and Tg2 are the temperatures at which the noise damper 20 or the inner liner 10 undergoes a glass transition (ie, hardening). Thereby, it is possible that the glass transition (that is, hardening) of the noise damper 20 is prevented from occurring before the glass transition of the inner liner 10. Therefore, it is possible that the noise damper 20 in this embodiment deforms flexibly following the deformation of the inner liner 10 even in a low temperature environment, thereby, it is possible that the durability of the noise damper 20 is improved.

In order to effectively exert the above effects, it is preferred that a difference (Tg2-Tg1) between the glass transition temperature Tg2 of the inner liner 10 and the glass transition temperature Tg1 of the noise damper 20 is not less than 20 degrees Celsius. Note that when the difference (Tg2-Tg1) is less than 20 degrees Celsius, the noise damper 20 cannot sufficiently follow the deformation of the inner liner 10 in a low temperature environment, therefore, it is possible that the durability of the noise damper 20 cannot be sufficiently improved. Thereby, the difference (Tg2-Tg1) is more preferably not less than 25 degrees Celsius, and further preferably not less than 30 degrees Celsius.

The glass transition temperature Tg1 of the noise damper 20 and the glass transition temperature Tg2 of the inner liner 10 can be appropriately set as long as the difference (Tg2-Tg1) of the glass transition temperature can satisfy the above ranges. Note that in order to improve the durability of the noise damper 20 in a low temperature environment, it is preferred that the glass transition temperature Tg1 of the noise damper 20 in this embodiment is in a range of from -80 to -50 degrees Celsius. Similarly, it is preferred that the glass transition temperature Tg2 of the inner liner 10 is in a range of from -60 to -30 degrees Celsius.

In order to satisfy the above relationship between the glass transition temperatures Tg1 and Tg2, the sponge material of the noise damper 20 and composition of the inner liner 10 and the like are appropriately selected. It is preferred that the sponge material of the noise damper 20 has composition that can improve structural flexibility and homogeneity by increasing the soft segment region of polyurethane foam, for example. As an example of the composition, it is preferred that the average molecular weight of the polyol, which is one of the main raw materials of the polyurethane foam, is not less than 2000, and further, the average hydroxyl value is not more than 100. On the other hand, the inner liner 10 can be produced by appropriately adjusting the content (phr) of each of the materials for natural rubber, CL-IIR (chlorinated butyl rubber), and oil, for example.

It is preferred that density of the noise damper 20 is in a range of from 10 to 40 kg/m3. The noise damper 20 configured as such can effectively decrease the running noise (around 250 Hz, for example) without increasing the mass of the tire 1.

Further, it is preferred that volume v1 of the noise damper 20 is in a range of from 0.4% to 30% of total volume V2 of a tire inner cavity 17.

The volume v1 of the noise damper 20 is apparent total volume of the noise damper 20, which means the volume determined from the outer shape including the inner cells.

The total volume V2 of the tire inner cavity is approximately obtained by the following formula (2) in the standard state:

$$V2 = A \times \{(Di - Dr)/2 + Dr\} \times \pi \quad \dots \quad (2)$$

wherein

A: a cross-sectional area of the tire inner cavity obtained by CT scanning the tire-rim assembly
Di: a maximum outer diameter of the tire inner cavity surface
Dr: rim diameter
$\pi$: circumference ratio

when the volume v1 is less than 0.4% of the total volume V2, it is possible that the noise damper 20 cannot sufficiently convert the vibration energy of the air into thermal energy. On the other hand, if the volume v1 is more than 30% of the total volume V2, it is possible that the mass and production cost of the tire 1 are increased. Further, when puncture repair is carried out by using puncture repair liquid (not shown), it is possible that the amount of puncture repair liquid used for the noise damper 20 is increased.

It is preferred that tensile strength of the noise damper 20 is in a range of from 70 to 115 kPa. If the tensile strength of the noise damper 20 is less than 70 kPa, it is possible that the durability of the noise damper 20 is deteriorated. Conversely, if the tensile strength of the noise damper 20 is more than 115 kPa, when a foreign object such as a nail sticks into the region including the noise damper 20 of the tread portion 2, the noise damper 20 may be pulled by the foreign object, therefore, it is possible that the noise damper 20 comes off the tire inner cavity surface 16 of the tread portion 2.

The damping rubber body 30 is disposed inside the tread portion 2. The damping rubber body 30 is arranged on a radially inner or outer side, inner side in this embodiment, of the belt layer 7. The damping rubber body 30 in this embodiment is disposed between the carcass 6 and the belt layer 7. The damping rubber body 30 is made of rubber different from topping rubber (not shown) included in the carcass ply 6A and the belt ply 7A.

A ratio (H1/H2) of hardness H1 of the damping rubber body 30 and hardness H2 of the tread rubber 11 disposed in the tread portion 2 is set to be in a range of from 0.5 to 1.0. Here, "rubber hardness" is defined as rubber hardness measured in accordance with Japanese Industrial Standard JIS-K 6253 by a type-A durometer under an environment of 23 degrees Celsius.

The damping rubber body 30 configured as such can effectively suppress vibration of the tread portion 2, therefore, it is possible that the running noise (around 160 Hz, for example) is effectively decreased. Besides, the noise damper 20 described above can also decrease the running noise around 250 Hz, therefore, it is possible that noise performance of the tire 1 is effectively improved. Further, the damping rubber body 30 in this embodiment is disposed between the carcass 6 and the belt layer 7, therefore, vibration of the carcass 6 and the belt layer 7 is suppressed, thereby, it is possible that road noise is decreased.

Note that if the ratio (H1/H2) is not less than 1.0, it is possible that the vibration of the tread portion 2 cannot be sufficiently suppressed. Further, if the ratio (H1/H2) is less than 0.5, rigidity of the damping rubber body 30 becomes small, therefore, it is possible that steering stability is not maintained. From this point of view, it is preferred that the ratio (H1/H2) is not more than 0.8 and not less than 0.6.

The hardness H1 of the damping rubber body 30 and the hardness H2 of the tread rubber 11 can be appropriately set as long as the ratio (H1/H2) satisfies the above conditions. It is preferred that the hardness H1 in this embodiment is set to be in a range of from 30 to 73 degrees. Further, it is preferred that the hardness H2 in this embodiment is set to be in a range of from 55 to 75 degrees. Thereby, the tire 1 can effectively suppress the vibration of the tread portion 2 while maintaining the steering stability.

Note that rubber specialized for adhesion performance of the carcass cords (not shown) and the belt cords (not shown) (that is, rubber with low hardness) is used for the topping rubber (not shown) included in the carcass ply 6A and the belt ply 7A. Therefore, it is preferred that the hardness H1 of the damping rubber body 30 is larger than hardness H3 of the topping rubber. Note that a ratio (H1/H3) of the hardness H1 of the damping rubber body 30 and the hardness H3 of the topping rubber can be set to be in a range of from 0.4 to 1.2.

A width W1 in the tire axial direction of the damping rubber body 30 can be appropriately set. The width W1 of the damping rubber body 30 in this embodiment is set to be in a range of from 60% to 130% of a width w2 in the tire axial direction of the belt layer 7. The damping rubber body 30 configured as such can effectively suppress the vibration of the tread portion 2 while preventing an increase in the mass of the tire 1.

Note that if the width W1 of the damping rubber body 30 is less than 60% of the width w2 of the belt layer 7, it is possible that the vibration of the tread portion 2 cannot be sufficiently suppressed. Conversely, if the width W1 of the damping rubber body 30 is more than 130% of the width w2 of the belt layer 7, it is possible that the increase of the mass of the tire 1 cannot be prevented. From this point of view, it is preferred that the width W1 of the damping rubber body 30 is not less than 70% and not more than 120% of the width w2 of the belt layer 7.

Positions of each of outer ends 30t in the tire axial direction of the damping rubber body 30 are appropriately set. Each of the outer end 30t in this embodiment terminates axially outside with respect to respective one of outer ends 7t in the tire axial direction of the belt layer 7. Further, each of the outer ends 30t terminates axially inside with respect to respective one of outer ends 9t in the tire axial direction of the band layer 9. Thereby, the damping rubber body 30 can cover the entire area in the tire axial direction of the belt layer 7 on the radially inner side, therefore, it is possible that the running noise (around 160 Hz, for example) is effectively decreased.

A maximum thickness T1 of the damping rubber body 30 can be appropriately set. Note that if the maximum thickness T1 is small, it is possible that the vibration of the tread portion 2 cannot be sufficiently suppressed. Conversely, if the maximum thickness T1 is large, the movement of the tread portion 2 becomes large, therefore, it is possible that the steering stability is deteriorated. From such a point of view, it is preferred that the maximum thickness T1 is not less than 4% and not more than 20% of a maximum thickness T2 (not shown) of the tread portion 2.

It is preferred that a loss tangent tan δ at 0 degrees Celsius of the tread rubber 11 is not less than 0.40. Thereby, wet grip performance of the tire 1 is improved. Such an increase in the wet grip performance can be devoted to the decrease of volume of the grooves 14 of the tread portion 2, for example, therefore, it is possible that the running noise is further decreased.

Further, it is preferred that the loss tangent tan δ at 70 degrees Celsius of the tread rubber 11 is not more than 0.20. Thereby, rolling resistance of the tire 1 can be decreased and deterioration of fuel efficiency can be suppressed by providing the noise damper 20 and the damping rubber body 30.

The loss tangent tan δ at 0 degrees Celsius and the loss tangent tan δ at 70 degrees Celsius are measured in accordance with Japanese Industrial Standard JIS-K6394. The loss tangent tan δ at 0 degrees Celsius and the loss tangent tan δ at 70 degrees Celsius in this embodiment are measured by using a viscoelasticity spectrometer available from Iwamoto Quartz GlassLab Co., Ltd. under a condition of respective temperature (0 degrees Celsius or 70 degrees Celsius), a frequency of 10 Hz, an initial tensile strain of 10%, and an amplitude of dynamic strain of ± 2%.

The tread rubber 11 in this embodiment contains carbon black, silica, and sulfur. A content A1 (phr) of the carbon black, a content A2 (phr) of the silica, and a content A3 (phr) of the sulfur can be set as appropriate but it is preferred that they satisfy the relationship of the following formula (1):

$$(1.4 \times A1 + A2)/A3 \geq 20 \ \ldots \ (1).$$

By satisfying the above formula (1), the ratio of the carbon black content A1 and the silica content A2 in the tread rubber 11 can be increased, therefore, anti-wear performance is improved. It is possible that the running noise is further decrease by devoting this increase in the anti-wear performance to decrease in the volume of the grooves 14 of the tread portion 2, for example. Furthermore, when the puncture repair is performed by using the puncture repair liquid, occurrence of uneven wear of the tread rubber 11 is suppressed even when the puncture repair liquid is unevenly distributed.

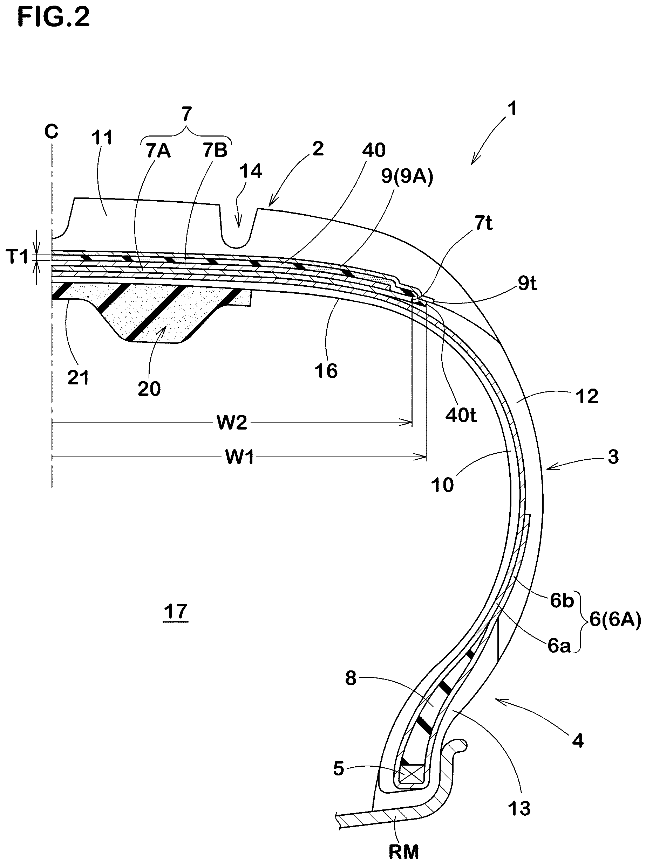

Although the damping rubber body 30 in this embodiment is arranged on the inner side in the tire radial direction of the belt layer 7, it is not limited to such an embodiment. The damping rubber body 30 may be arranged on the outer side in the tire radial direction of the belt layer 7. Fig. 2 is a tire meridian section passing through the tire rotational axis of the tire 1, in the standard state, according to another embodiment of the present invention. Note that, in this embodiment, the same components as those of the previous embodiment are denoted by the same reference numerals, and the description thereof may be omitted.

A damping rubber body 40 in this embodiment is disposed between the belt layer 7 and the band layer 9. The damping rubber body 40 configured as such can effectively suppress the vibration of the tread portion 2, therefore, it is possible that the running noise (around 160 Hz for example) is effectively decreased. Moreover, the damping rubber body 40 in this embodiment is disposed between the belt layer 7 and the band layer 9, therefore, the vibration of the belt layer 7 and the band layer 9 is suppressed, thereby, it is possible that the road noise is decreased.

Outer ends 40t in the tire axial direction of the damping rubber body 40 in this embodiment can be appropriately set. Each of the outer ends 40t in this embodiment terminates axially outside with respect to respective one of the outer ends 7t of the belt layer 7. Further, each of the outer ends 40t terminates axially inside with respect to respective one of the outer ends 9t of the band layer 9. Thereby, the damping rubber body 40 can cover the entire area in the tire axial direction of the belt layer 7 on the radially outer side, therefore, it is possible that the running noise (around 160 Hz, for example) is effectively decreased.

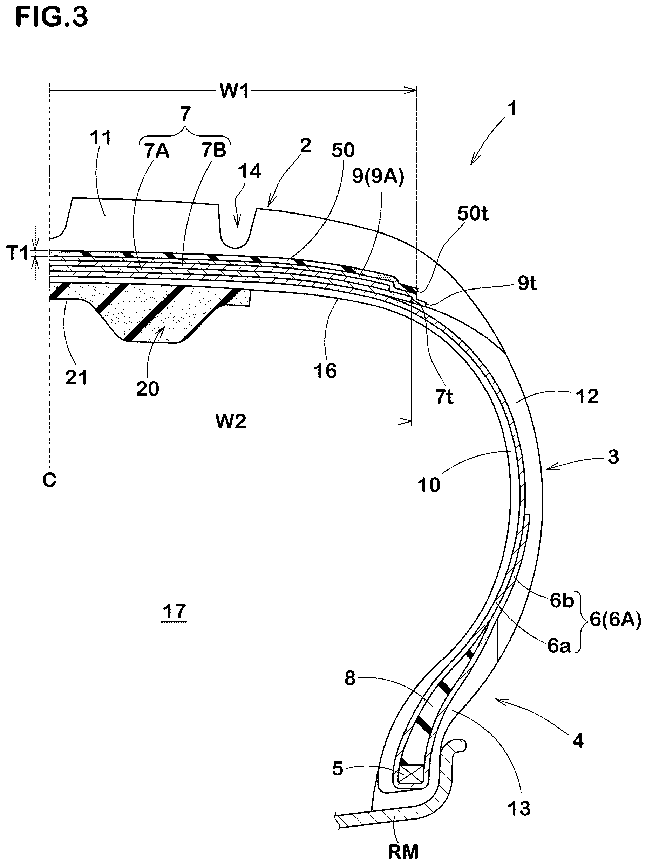

Fig. 3 is a tire meridian section passing through the tire rotational axis of the tire 1, in the standard state, according to yet another embodiment of the present invention. Note that, in this embodiment, the same components as those of the previous embodiments are denoted by the same reference numerals, and the description thereof may be omitted.

A damping rubber body 50 in this embodiment is arranged on the outer side in the tire radial direction of the band layer 9. The damping rubber body 50 configured as such can effectively suppress the vibration of the tread portion 2, therefore, it is possible that the running noise (around 160 Hz for example) is effectively decreased. Moreover, the damping rubber body 50 in this embodiment is arranged on the outer side in the tire radial direction of the band layer 9, therefore, the vibration of the band layer 9 is suppressed, thereby, it is possible that the road noise is decreased.

Outer ends 50t in the tire axial direction of the damping rubber body 50 in this embodiment can be appropriately set. Each of the outer ends 50t in this embodiment terminates axially outside with respect to respective one of the outer ends 7t of the belt layer 7. Further, each of the outer ends 50t terminates axially inside with respect to respective one of the outer ends 9t of the band layer 9. Thereby, the damping rubber body 50 can cover the entire area in the tire axial direction of the belt layer 7 on the radially outer side, therefore, it is possible that the running noise (around 160 Hz, for example) is effectively decreased.

while detailed description has been made of the especially preferred embodiments of the present invention, the present invention can be embodied in various forms without being limited to the illustrated embodiments.

**Working Examples**

[Working Examples A]

Tires having the basic structure shown in Fig. 1 and the noise damper of Table 1 were manufactured, and then their performance was evaluated (Examples 1 to 17). For comparison, a tire having no noise damper (Reference 1) and a tire (Reference 2) in which the glass transition temperature Tg1 of the noise damper is larger than the glass transition temperature Tg2 of the inner liner are manufactured, and then their performance was evaluated. Further, a tire (Reference 3) having the same glass transition temperature Tg1 of the noise damper and the glass transition temperature Tg2 of the inner liner was manufactured, and then its performance was evaluated. The specifications common to each of the Examples and the References are as follows.

Tire size: 165/65R18
Rim size: 18x7JJ
Inner pressure: 320 kPa
Test car: domestically produced FR car with displacement of 2500 cc
Tread rubber:

Composition:

Natural rubber (TSR20): 15 phr
SBR1 (terminal modified): 45 phr

Bound styrene content: 28%
Vinyl group content: 60%
Glass transition point: -25 degrees Celsius

SBR2 (terminal modified): 25 phr

Bound styrene content: 35%
Vinyl group content: 45%
Glass transition point: -25 degrees Celsius

BR (BR150B): 15 phr
Silane coupling agent (Si266): 4 phr
Resin (SYLVARES SA85 available from Arizona Chemical Co.): 8 phr
oil: 4 phr
wax: 1.5 phr
Age resistor (6C): 3 phr
Stearic acid: 3 phr
Zinc oxide: 2 phr
Vulcanization accelerator (NS): 2 phr
Vulcanization accelerator (DPG): 2 phr
Carbon black (N220): 5 phr
Silica (VN3, 1115MP): 70 phr
Sulfur: 2 phr

Hardness H2 of tread rubber of vulcanized tire: 64 degrees
Maximum thickness T2: 10 mm
Loss tangent tan $\delta$ at 0 degrees Celsius: 0.50
Loss tangent tan $\delta$ at 70 degrees Celsius: 0.10
(1.4 $\times$ carbon black content A + silica content B) / sulfur content C: 37.5

Belt layer:

width w2 in tire axial direction: 120 mm

Hardness H3 of topping rubber of carcass ply and belt ply: 60 degrees
Inner liner:

Composition (as an example):

Natural rubber (TSR20): 15 phr
CL IIR: 75 phr
Recycled rubber: 20 phr
Carbon black N660: 50 phr
Oil: 5 phr
Stearic acid: 1.5 phr
Zinc oxide: 1.5 phr
Sulfur: 0.5 phr
Vulcanization accelerator (M): 0.5 phr
Vulcanization accelerator (DM): 0.7 phr

Glass transition temperature Tg2: adjusted by changing the above composition
Glass transition temperature Tg1 of noise damper: adjusted by changing materials of noise damper
Damping rubber body:

Composition:

Natural rubber (TSR20): 65 phr
SBR (Nipol 1502): 35 phr

Carbon black N220: 52 phr
oil: 15 phr
Stearic acid: 1.5 phr
Zinc oxide: 2 phr
Sulfur: 3 phr
Vulcanization accelerator (CZ): 1 phr

Hardness H1 of tread rubber of vulcanized tire: 58 degrees
Maximum thickness T1: 1 mm

Ratio (H1/H2) of Hardness H1 of damping rubber body and Hardness H2 of tread rubber: 0.91
Ratio (W1/W2) of width W1 of damping rubber body and width w2 of belt layer: 100%
Test methods are as follows.

< Noise Performance >

Each of the test tires was mounted on the above rim and was mounted on all wheels of the above test car under the above condition of the inner pressure. Then a total sound pressure (decibel) of the running noise (in a range of from 100 to 200 Hz and in a range of from 200 to 300 Hz) was measured by using a sound concentrating microphone attached to the center part of the backrest of the driver's seat while the test car was driven on a road for measuring road noise (rough asphalt surface road) at a speed of 60 km/h. The results are indicated by an index based on the Example 1 being 100, wherein the larger the numerical value, the smaller the running noise is, which is better.

< Durability of Noise Damper in Low Temperature Environment >

Each of the test tires was mounted on the above rim and then, by using a drum testing machine, a distance until the noise damper and its vicinity were damaged was measured under the conditions of the above inner pressure, the tire load of 4.8 kN, the speed of 80 km/h, and the room temperature of -50 degrees Celsius. The results are indicated by an index based on the Example 1 being 100, wherein the larger the numerical value, the higher the durability is, which is better.

< Tire Mass >

The mass per tire was measured for each of the test tires. The results are indicated by an index based on the reciprocal of the mass of the tire of the Example 1 being 100, wherein the larger the numerical value, the lighter the tire is.

< Separation Resistance Performance of Noise Damper when Nail sticks >

Each of the test tires was mounted on the above rim and mounted on all wheels of the above test car under the condition of the above inner pressure. And each of the test tires was punctured by rolling on a nail, then the damaged part was disassembled to measure the area of separation of the noise damper from the tire inner cavity surface of the tread portion due to the noise damper being pulled by the nail. The results are indicated by an index based on the Example 1 being 100, wherein the larger the numerical value, the higher the separation resistance performance is, which is better.

The test results are shown in Table 1.

Table 1. (1/2)

| | Ref.1 | Ref.2 | Ref.3 | Ex.1 | Ex.2 | Ex.3 | Ex.4 | Ex.5 | Ex.6 | Ex.7 |
|---|---|---|---|---|---|---|---|---|---|---|
| Presence (P) or Absence (A) of Noise damper | A | P | P | P | P | P | P | P | P | P |
| Presence (P) or Absence (A) of Damping rubber body | A | A | A | A | P | P | P | P | P | P |
| Difference (Tg2-Tg1) of Glass transition temperature Tg2 of Inner liner and Glass transition temperature Tg1 of Noise damper [degree Celsius] | - | -10.0 | 0.0 | 15.0 | 15.0 | 20.0 | 25.0 | 30.0 | 25.0 | 25.0 |
| Density of Noise damper [kg/m3] | - | 27.0 | 27.0 | 27.0 | 27.0 | 27.0 | 27.0 | 27.0 | 5.0 | 10.0 |
| Ratio (V1/V2) of Volume V1 of Noise damper and Total volume V2 of Tire inner cavity [%] | - | 15.0 | 15.0 | 15.0 | 15.0 | 15.0 | 15.0 | 15.0 | 15.0 | 15.0 |
| Tensile strength of Noise damper [kPa] | - | 90.0 | 90.0 | 90.0 | 90.0 | 90.0 | 90.0 | 90.0 | 90.0 | 90.0 |
| Noise performance [index] [larger is better] | 80 | 100 | 100 | 100 | 110 | 110 | 110 | 110 | 105 | 107 |
| Durability of Noise damper in low temperature environment [index] [larger is better] | - | 80 | 90 | 100 | 100 | 105 | 110 | 115 | 110 | 110 |
| Separation resistance performance of Noise damper when Nail sticks [index] [larger is better] | - | 100 | 100 | 100 | 100 | 100 | 100 | 100 | 100 | 100 |
| Tire mass [index] [larger is better] | 115 | 100 | 100 | 100 | 100 | 100 | 100 | 100 | 102 | 101 |

Table 1. (2/2)

| | Ex.8 | Ex.9 | Ex.10 | Ex.11 | Ex.12 | Ex.13 | Ex.14 | Ex.15 | Ex.16 | Ex.17 |
|---|---|---|---|---|---|---|---|---|---|---|
| Presence (P) or Absence (A) of Noise damper | P | P | P | P | P | P | P | P | P | P |
| Presence (P) or Absence (A) of Damping rubber body | P | P | P | P | P | P | P | P | P | P |
| Difference (Tg2-Tg1) of Glass transition temperature Tg2 of Inner liner and Glass transition temperature Tg1 of Noise damper [degree Celsius] | 25.0 | 25.0 | 25.0 | 25.0 | 25.0 | 25.0 | 25.0 | 25.0 | 25.0 | 25.0 |
| Density of Noise damper [kg/m3] | 40.0 | 50.0 | 27.0 | 27.0 | 27.0 | 27.0 | 27.0 | 27.0 | 27.0 | 27.0 |
| Ratio (V1/V2) of Volume V1 of Noise damper and Total volume V2 of Tire inner cavity [%] | 15.0 | 15.0 | 0.3 | 0.4 | 30.0 | 35.0 | 15.0 | 15.0 | 15.0 | 15.0 |
| Tensile strength of Noise damper [kPa] | 90.0 | 90.0 | 90.0 | 90.0 | 90.0 | 90.0 | 60.0 | 70.0 | 115.0 | 125.0 |
| Noise performance [index] [larger is better] | 115 | 116 | 104 | 105 | 120 | 125 | 110 | 110 | 110 | 110 |
| Durability of Noise damper in low temperature environment [index] [larger is better] | 110 | 110 | 110 | 110 | 110 | 110 | 107 | 108 | 110 | 110 |
| Separation resistance performance of Noise damper when Nail sticks [index] [larger is better] | 100 | 100 | 100 | 100 | 100 | 100 | 100 | 100 | 98 | 96 |
| Tire mass [index] [larger is better] | 99 | 98 | 110 | 105 | 95 | 90 | 100 | 100 | 100 | 100 |

From the test results, it was possible that the durability of the noise damper in a low temperature environment was improved for the tires as the Examples as compared with the tires as the References while decreasing the running noise.

[Working Examples B]

Tires having the basic structure shown in Figs. 1, 2 or 3 and the noise damper and the damping rubber body of Table 2 were manufactured, and then their performance was evaluated (Examples 18 to 29). The specifications common to each of the Examples are the same as those of the Working Examples A except for those listed in Table 2 and shown below.

Noise damper:

Density: 27 (kg/cm3)
Tensile strength : 90.0 (kPa)

Difference (Tg2-Tg1) between glass transition temperature Tg2 of inner liner and glass transition temperature Tg1 of noise damper: 25 (degrees Celsius)
Ratio (V1/V2) of volume V1 of noise damper and total volume V2 of tire inner cavity: 15 (%)
Hardness H1 of damping rubber body of vulcanized tire:
adjusted by changing oil content

The test methods are the same as in the Working Examples A except for the following method.

< Steering Stability >

Each of the test tires was mounted on the above rim and mounted on all wheels of the above test car under the condition of the above inner pressure. While the test car was driven on a dry asphalt test course, characteristics related to steering response, rigid impression, grip, and the like were evaluated by the driver's feeling. The results are indicated by an evaluation point based on the Example 18 being 100, wherein a larger numerical value is better.
The test results are shown in Table 2.

Table 2.

| | Ex. 18 | Ex. 19 | Ex. 20 | Ex. 21 | Ex. 22 | Ex. 23 | Ex. 24 | Ex. 25 | Ex. 26 | Ex. 27 | Ex. 28 | Ex. 29 |
|---|---|---|---|---|---|---|---|---|---|---|---|---|
| Figure showing Tire cross section | Fig. 1 | Fig. 1 | Fig. 1 | Fig. 1 | Fig. 1 | Fig. 1 | Fig. 1 | Fig. 1 | Fig. 1 | Fig. 1 | Fig. 2 | Fig. 3 |
| Ratio (H1/H2) of Hardness H1 of Damping rubber body and Hardness H2 of Tread rubber | 0.4 | 0.5 | 0.7 | 1.0 | 1.2 | 0.7 | 0.7 | 0.7 | 0.7 | 0.7 | 0.7 | 0.7 |
| Ratio (wl/w2) of width W1 of Damping rubber body and width W2 of Belt layer [%] | 100 | 100 | 100 | 100 | 100 | 50 | 60 | 70 | 130 | 140 | 100 | 100 |
| Noise performance [index] [larger is better] | 125 | 112 | 110 | 109 | 108 | 103 | 105 | 108 | 115 | 120 | 108 | 105 |
| Tire mass [index] [larger is better] | 100 | 100 | 100 | 100 | 100 | 110 | 108 | 105 | 95 | 93 | 100 | 100 |
| Steering stability [index] [larger is better] | 100 | 102 | 105 | 108 | 110 | 105 | 105 | 105 | 105 | 105 | 109 | 110 |

From the test results, it was possible that the running noise was decreased for the tires as the Examples as compared with the tires as the References of the working Examples A. Further, by setting the ratio (H1/H2) of the hardness H1 of the damping rubber body and the hardness H2 of the tread rubber to the preferable range, it was possible that the steering stability was improved.

[Working Examples C]

Tires having the basic structure shown in Fig. 1 and the noise damper, the damping rubber body, and the tread rubber of Table 2 were manufactured, and then their performance was evaluated (Examples 30 to 36). The specifications common to each of the Examples are the same as those of the Working Examples A except for those listed in Table 3 and shown below. Note that the common specifications of the noise damper are as in the Working Examples B. The common specifications of the damping rubber body are as in the Working Examples A.
Tread rubber:
Composition: same as in the Working Examples A except for carbon black, silica, and sulfur shown below

   Carbon black (N220): A (arbitrary) phr
   Silica (VN3, 1115MP): B (arbitrary) phr
   Sulfur: C (arbitrary) phr

The test methods are the same as in the Working Examples A except for the following methods.

< Wet Grip Performance >

Each of the test tires was mounted on the above rim and mounted on all wheels of the above test car under the condition of the above inner pressure. While the test car was driven on a wet asphalt road, grip performance was evaluated by the driver's feeling. The evaluation was indicated by an index based on the Example 30 being 100, wherein a larger numerical value is better.

< Rolling Resistance Performance >

Each of the test tires was mounted on the above rim, and then the rolling resistance under the condition of the above inner pressure, tire load of 4.8 kN, and at a speed of 80 km/h was measured by using a rolling resistance tester. The results are indicated by an index based on the reciprocal of the value of the Example 30 being 100, wherein a larger numerical value is better.

< Anti-wear Performance >

Each of the test tires was mounted on the above rim and mounted on all wheels of the above test car under the condition of the above inner pressure. Then the test car was driven on highways and general roads (including city roads and mountain roads) with two members on the car for a total of 340 km. Then a wear index (running distance / wear amount) was measured in three block-like portions on a tire circumference of a shoulder land region of the tread portion, and then an average value thereof was calculated. The results are indicated by an index based on the reciprocal of the wear index of the Example 30 being 100, wherein a larger numerical value is better.
The test results are shown in Table 3.

Table 3.

|  |  | Ex.30 | Ex.31 | Ex.32 | Ex.33 | Ex.34 | Ex.35 | Ex.36 |
|---|---|---|---|---|---|---|---|---|
| Loss tangent tan $\delta$ at zero degrees Celsius of Tread rubber |  | 0.35 | 0.40 | 0.50 | 0.50 | 0.50 | 0.50 | 0.50 |
| Loss tangent tan $\delta$ at 70 degrees Celsius of Tread rubber |  | 0.25 | 0.25 | 0.25 | 0.20 | 0.10 | 0.10 | 0.10 |
| $(1.4 \times A1 + A2)/A3$ |  | 15.0 | 15.0 | 15.0 | 15.0 | 15.0 | 20.0 | 37.5 |
| Noise performance | [index] [larger is better] | 110 | 110 | 110 | 110 | 110 | 110 | 110 |
| Wet grip performance | [index] [larger is better] | 100 | 105 | 110 | 110 | 110 | 110 | 110 |
| Rolling resistance performance | [index] [larger is better] | 100 | 100 | 100 | 105 | 110 | 110 | 110 |
| Anti-wear performance | [index] [larger is better] | 100 | 100 | 100 | 100 | 100 | 105 | 115 |

From the test results, it was possible that the running noise of the tires as the Examples was decreased as compared with the tires as the References of the working Examples A. Further, by setting the loss tangents tan δ (zero degrees Celsius, 70 degrees Celsius), the carbon black content, the silica content, and the sulfur content to the preferable ranges, it was possible that the wet grip performance, the rolling resistance performance, and the anti-wear performance were improved.

**Claims**

1. A pneumatic tire comprising:

   a carcass extending between a pair of bead portions,
   an inner liner arranged on an inner side in a tire radial direction of the carcass and forming a tire inner cavity surface, and
   a noise damper made of a porous material and fixed to the tire inner cavity surface of the inner liner, wherein
   a glass transition temperature Tg1 of the noise damper is lower than a glass transition temperature Tg2 of the inner liner.

2. The pneumatic tire according to claim 1, wherein
   a difference (Tg2-Tg1) of the glass transition temperature Tg2 of the inner liner and the glass transition temperature Tg1 of the noise damper is not less than 20 degrees Celsius.

3. The pneumatic tire according to claim 1 or 2, wherein
   a density of the noise damper is in a range of from 10 to 40 kg/m3.

4. The pneumatic tire according to any one of claims 1 to 3, wherein
   a volume V1 of the noise damper is in a range of from 0.4% to 30% of a total volume V2 of a tire inner cavity.

5. The pneumatic tire according to any one of claims 1 to 4, wherein
   a tensile strength of the noise damper is in a range of from 70 to 115 kPa.

6. The pneumatic tire according to any one of claims 1 to 5 further comprising

   a belt layer arranged on an outer side in the tire radial direction of the carcass and inside the tread portion, and
   a damping rubber body arranged inside the tread portion and on an inner or outer side in the tire radial direction of the belt layer,
   wherein
   a width W1 in a tire axial direction of the damping rubber body is in a range of from 60% to 130% of a width w2 in the tire axial direction of the belt layer.

7. The pneumatic tire according to claim 6, wherein
   a ratio (H1/H2) of a hardness H1 of the damping rubber body and a hardness H2 of a tread rubber arranged in the tread portion is in a range of from 0.5 to 1.0.

8. The pneumatic tire according to any one of claims 1 to 7 further comprising a tread rubber arranged in a tread portion, wherein
   the tread rubber has a loss tangent tan δ at zero degrees Celsius not less than 0.40 and the loss tangent tan δ at 70 degrees Celsius not more than 0.20.

9. The pneumatic tire according to any one of claims 1 to 8 further comprising a tread rubber arranged in a tread portion, wherein

   the tread rubber contains carbon black, silica, and sulfur, and
   a content A1 (phr) of the carbon black, a content A2 (phr) of the silica, and a content A3 (phr) of the sulfur satisfy relationship of the following formula (1):

$$(1.4 \times A1 + A2)/A3 \geq 20 \ldots (1).$$

**Patentansprüche**

1. Luftreifen, umfassend:

 eine Karkasse, die sich zwischen zwei Wulstabschnitten erstreckt,
 einen Innerliner, der an einer Innenseite in einer Reifenradialrichtung der Karkasse angeordnet ist und eine Reifeninnenhohlraum-Oberfläche bildet, und
 einen Geräuschdämpfer, der aus einem porösen Material hergestellt und an der Reifeninnenhohlraum-Oberfläche des Innerliners befestigt ist,
 wobei eine Glasübergangstemperatur Tg1 des Geräuschdämpfers niedriger als eine Glasübergangstemperatur Tg2 des Innerliners ist.

2. Luftreifen nach Anspruch 1, wobei eine Differenz (Tg2-Tg1) der Glasübergangstemperatur Tg2 des Innerliners und der Glasübergangstemperatur Tg1 des Geräuschdämpfers nicht weniger als 20 Grad Celsius beträgt.

3. Luftreifen nach Anspruch 1 oder 2, wobei eine Dichte des Geräuschdämpfers in einem Bereich von 10 bis 40 kg/m3 liegt.

4. Luftreifen nach einem der Ansprüche 1 bis 3, wobei ein Volumen V1 des Geräuschdämpfers in einem Bereich von 0,4% bis 30% eines Gesamtvolumens V2 des Reifeninnenhohlraums liegt.

5. Luftreifen nach einem der Ansprüche 1 bis 4, wobei eine Zugfestigkeit des Geräuschdämpfers in einem Bereich von 70 bis 115 Pa liegt.

6. Luftreifen nach einem der Ansprüche 1 bis 5, ferner umfassend

 eine Gürtelschicht, die an einer Außenseite in der Reifenradialrichtung der Karkasse und innerhalb des Laufflächenabschnitts angeordnet ist, und
 einen Dämpfungsgummikörper, der innerhalb des Laufflächenabschnitts und an einer Innen- oder Außenseite in der Reifenradialrichtung der Gürtelschicht angeordnet ist,
 wobei eine Breite W1 in einer Reifenaxialrichtung des Dämpfungsgummikörpers in einem Bereich von 60% bis 130% einer Breite W2 in der Reifenaxialrichtung der Gürtelschicht liegt.

7. Luftreifen nach Anspruch 6, wobei ein Verhältnis (H1/H2) einer Härte H1 des Dämpfungsgummikörpers und einer Härte H2 eines in dem Laufflächenabschnitt angeordneten Laufflächengummis in einem Bereich von 0,5 bis 1,0 liegt.

8. Luftreifen nach einem der Ansprüche 1 bis 7, der einen Laufflächengummi umfasst, der in einem Laufflächenabschnitt angeordnet ist, wobei der Laufflächengummi einen Verlusttangens tan $\delta$ bei null Grad Celsius von nicht weniger als 0,40 aufweist und der Verlusttangens tan $\delta$ bei 70 Grad Celsius nicht größer als 0,20 ist.

9. Luftreifen nach einem der Ansprüche 1 bis 8, der ferner einen Laufflächengummi umfasst, der in einem Laufflächenabschnitt angeordnet ist,

 wobei der Laufflächengummi Ruß, Siliciumdioxid und Schwefel enthält, und
 ein Gehalt A1 (phr) des Rußes, ein Gehalt A2 (phr) des Siliciumdioxids und ein Gehalt A3 (phr) des Schwefels die Beziehung der folgenden Formel (1) erfüllen:

$$(1{,}4 \times A1 + A2)/A3 \geq 20 \ldots (1).$$

**Revendications**

1. Bandage pneumatique comprenant :

   une carcasse s'étendant entre une paire de portions formant talons,
   une doublure intérieure agencée sur un côté intérieur dans une direction radiale du pneumatique de la carcasse et formant une surface de cavité intérieure du pneumatique, et
   un amortisseur de bruit réalisé en matériau poreux et fixé sur la surface de cavité intérieure du pneumatique de la doublure intérieure, dans lequel une température de transition vitreuse Tg1 de l'amortisseur de bruit est plus faible qu'une température de transition vitreuse Tg2 de la doublure intérieure.

2. Bandage pneumatique selon la revendication 1, dans lequel une différence (Tg2-Tg1) de la température de transition vitreuse Tg2 de la doublure intérieure et la température de transition vitreuse Tg1 de l'amortisseur de bruit n'est pas inférieure à 20 degrés Celsius.

3. Bandage pneumatique selon la revendication 1 ou 2, dans lequel une densité de l'amortisseur de bruit est dans une plage de 10 à 40 kg/m$^3$.

4. Bandage pneumatique selon l'une quelconque des revendications 1 à 3, dans lequel un volume V1 de l'amortisseur de bruit est dans une plage de 0,4 % à 30 % d'un volume total V2 d'une cavité intérieure du pneumatique.

5. Bandage pneumatique selon l'une quelconque des revendications 1 à 4, dans lequel une résistance à la traction de l'amortisseur de bruit est dans une plage de 70 à 115 kPa.

6. Bandage pneumatique selon l'une quelconque des revendications 1 à 5, comprenant en outre :

   une couche de ceinture agencée sur un côté extérieur dans la direction radiale du pneumatique de la carcasse et à l'intérieur de la portion formant bande de roulement, et
   un corps en caoutchouc d'amortissement agencé à l'intérieur de la portion formant bande de roulement et sur un côté intérieur ou un côté extérieur dans la direction radiale du pneumatique de la couche de ceinture, dans lequel
   une largeur W1 dans une direction axiale du pneumatique du corps en caoutchouc d'amortissement est dans une plage de 60 % à 130 % d'une largeur W2 dans la direction axiale du pneumatique de la couche de ceinture.

7. Bandage pneumatique selon la revendication 6, dans lequel un rapport (H1/H2) d'une dureté H1 du corps en caoutchouc d'amortissement sur une dureté H2 d'un caoutchouc de roulement agencé dans la portion formant bande de roulement est dans une plage de 0,5 à 1,0.

8. Bandage pneumatique selon l'une quelconque des revendications 1 à 7, comprenant en outre un caoutchouc de roulement agencé dans la portion formant bande de roulement, dans lequel
   le caoutchouc de roulement présente une tangente de perte tan $\delta$ à 0 °C qui n'est pas inférieure à 0,40 et une tangente de perte tan $\delta$ à 60 °C qui ne dépasse pas 0,20.

9. Bandage pneumatique selon l'une quelconque des revendications 1 à 8, comprenant en outre un caoutchouc de roulement agencé dans une portion formant bande de roulement, dans lequel
   le caoutchouc de roulement contient du noir de carbone, de la silice et de soufre, et
   une teneur A1 (phr) du noir de carbone, une teneur A2 (phr) de la silice, et une teneur A3 (phr) de soufre satisfont la relation de la formule suivante (1) :

$$(1,4 \times A1+A2)/A3 \geq 20 \qquad (1).$$

FIG.1

# FIG.2

# FIG.3

**EP 3 418 074 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 4960626 B